# EUROPÄISCHE PATENTSCHRIFT

(11) **EP 2 206 179 B1**
(45) Veröffentlichungstag und Bekanntmachung des Hinweises auf die Patenterteilung: **12.06.2013**
(21) Anmeldenummer: 08735657.2
(22) Anmeldetag: 01.04.2008
(51) Int. Cl.: H01M 2/36, F16K 31/24, F16K 31/20

(54) **WASSERNACHFÜLLSTOPFEN FÜR BATTERIEZELLEN**
WATER FILLING CONNECTOR FOR BATTERY CELLS
BOUCHON DE REMPLISSAGE POUR ÉLÉMENTS DE BATTERIE

(43) Veröffentlichungstag der Anmeldung: 14.07.2010
(73) Patentinhaber: Oschmann Gbr, 86938 Schondorf (DE)
(72) Erfinder: SCHERZER, Klaus, 85221 Dachau (DE); STAUFF, Hermann, 47877 Willich (DE)
(74) Vertreter: Gustorf, Gerhard
(86) Internationale Anmeldenummer: PCT/EP2008/053885
(87) Internationale Veröffentlichungsnummer: WO 2009/121402

(56) Entgegenhaltungen:
- EP-B- 0 763 262
- DE-U1- 29 519 146

## Beschreibung

Die Erfindung betrifft einen Wassernachfüllstopfen zum automatischen Befüllen von Batteriezellen nach dem Oberbegriff des Patentanspruchs 1.

Aus EP-B 763 262 ist eine Füllvorrichtung für Batteriezellen der angegebenen Gattung bekannt, bei der das Wasser hinter dem Anschlussstutzen auf einem U-förmigen Pfad nach oben, der wie ein Siphon wirkt, zu einer Überlaufwand geleitet wird, von wo es durch einen seitlichen Überströmkanal unter den geöffneten Ventilkörper gelangt.

Ein derartiger Nachfüllstopfen und Stopfen ähnlicher Bauart dienen dazu, Batteriezellen mit destilliertem Wasser automatisch nachzufüllen. Dies wird in der Praxis im wesentlichen in drei unterschiedlichen Verfahren bewerkstelligt:
1. Mittels Fallwasser aus einem Tank heraus, der in einer bestimmten Höhe über der zu befüllenden Batterie angebracht ist. Die Ausflussöffnung des Tanks wird mittels einer Schnellkupplung mit dem Füllsystem verbunden, das auf der Batterieoberfläche montiert ist, und die installierten Nachfüllstopfen steuern über ein Ventil- und Schwimmersystem den Wasserzulauf in die Batteriezellen.
2. Mittels einer Pumpe, die häufig von einem Motor mit Niederspannung von etwa 12 Volt angetrieben wird und aus einem Tank heraus das Wasser mit einem Druck von etwa 0,5 bis 1,0 bar bereitstellt. Die Ausflussöffnung der Pumpe wird mittels einer Schnellkupplung mit dem Füllsystem verbunden, das auf der Batterieoberfläche montiert ist. Auch hier steuern die installierten Füllstopfen über ein Ventil- und Schwimmersystem den Wasserzulauf in die Batteriezellen.
3. Mittels Leitungswasser aus dem öffentlichen Wassernetz. In diesem Fall wird der anstehende Wasserdruck aus dem öffentlichen Wassernetz von etwa 4 bar als Fülldruck genutzt und nach vorheriger Aufbereitung des Wassers mittels Ionentauscher über eine Schnellkupplung mit dem Füllsystem verbunden, das auf der Batterieoberfläche montiert ist. Ein Ventil- und Schwimmersystem steuert den Wasserzulauf durch die Füllstopfen in die Batteriezellen.

Die obigen drei Beispiele lassen erkennen, dass ein Füllsystem unter den unterschiedlichsten Bedingungen eingesetzt wird und funktionieren muss. Der Erfindung liegt daher die Aufgabe zugrunde, einen Wassernachfüllstopfen zur Verfügung zu stellen, der bei allen in der Praxis vorkommenden Drücken zuverlässig arbeitet, so dass er nicht nur für sehr niedrige Fülldrücke, sondern auch für relativ hohe Drücke problemlos verwendet werden kann.

Zur Lösung dieser Aufgabe ist erfindungsgemäß vorgesehen, dass bei dem Wassernachfüllstopfen der angegebenen Gattung zwischen dem ringförmigen Zulaufkanal und dem konischen Ventilsitz drallerzeugende Umlenkkanäle über dem Umfang verteilt angeordnet sind.

Diese Lösung bewirkt, dass das Wasser über die Umlenkkanäle kontrolliert in eine Rotationsbewegung versetzt wird, bevor es das Ventil erreicht. Durch diese Kreisbewegung des Wasserstroms wird ein Sog erzeugt, der im Peripheriebereich höchste Rotationsgeschwindigkeit hat und sich in seinem Kern neutral verhält. Die Kreisbewegung des abfließenden Wassers gibt den Impuls für den Schließvorgang des Ventilkörpers, so dass der Schließvorgang selbstregulierend, sehr exakt und in allen Druckbereichen nahezu identisch abläuft.

In Weiterbildung der Erfindung sind die Umlenkkanäle in einen im Gehäuse zentrisch angebrachten Ventilzylinder eingearbeitet und münden im wesentlichen tangential in dessen Innenraum oberhalb des Ventilsitzes. Dabei ist es günstig, wenn die Umlenkkanäle von dem ringförmigen Zulaufkanal ausgehend schräg nach oben verlaufen.

Weitere Merkmale und Vorteile der Erfindung ergeben sich aus der folgenden Beschreibung eines Ausführungsbeispiels, das in der Zeichnung dargestellt ist. Es zeigen:
Figur 1 die Seitenansicht eines Wassernachfüllstopfens gemäß der Erfindung,
Figur 2 eine Schrägansicht des Stopfens der Figur 1 von unten,
Figur 3 einen Längsschnitt durch den Nachfüllstopfen,
Figur 4 einen gegenüber Figur 3 um 90° gedrehten Schnitt durch den Nachfüllstopfen und
Figur 5 einen Horizontalschnitt durch den Stopfen in Höhe der Umlenkkanäle.

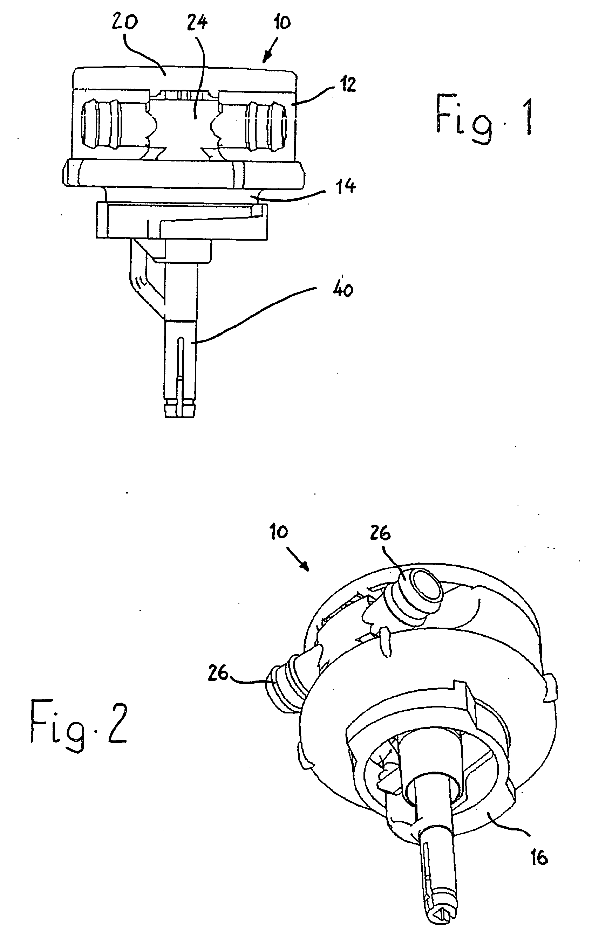

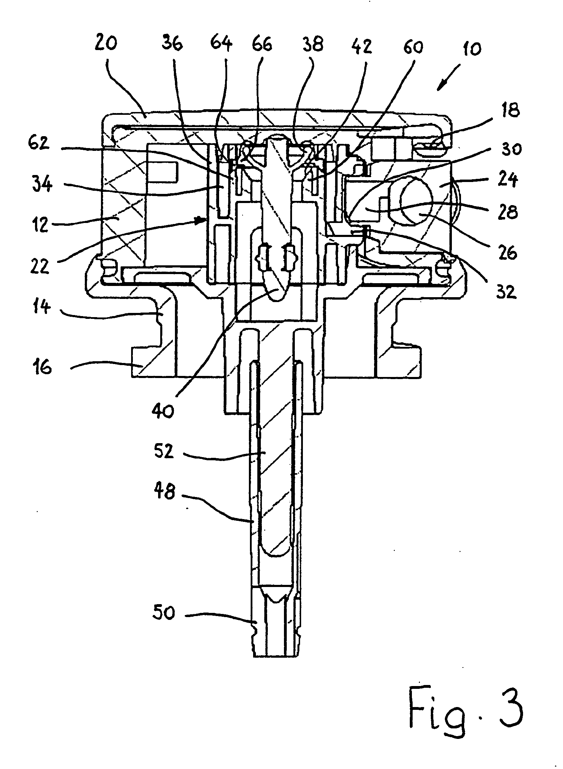

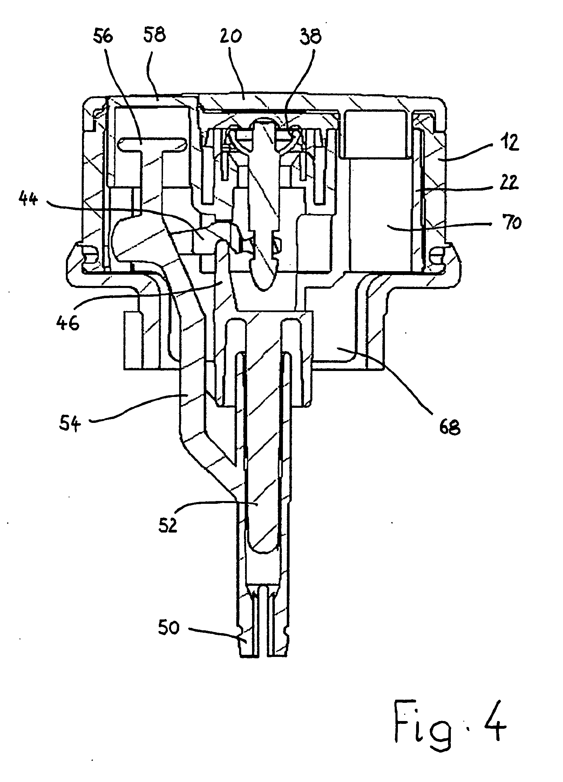

Der in den Figuren 1 und 2 von außen dargestellte Wassernachfüllstopfen 10 dient zum automatischen Einfüllen von Wasser in Batteriezellen und hat ein zylindrisches Stopfengehäuse 12, das gemäß Figur 3 und 4 mit Schnappeingriff mit einer Hülse 14 verbunden ist, die in die Nachfüllöffnung einer nicht gezeigten Batteriezelle eingesetzt werden kann. An der Hülse 14 sind Befestigungsmittel 16 angeformt, beispielsweise zur Renkverbindung in der Nachfüllöffnung der Batteriezelle. Am oberen Ende des Stopfengehäuses 12 ist über ein Scharnier 18 ein Deckel 20 angelenkt.

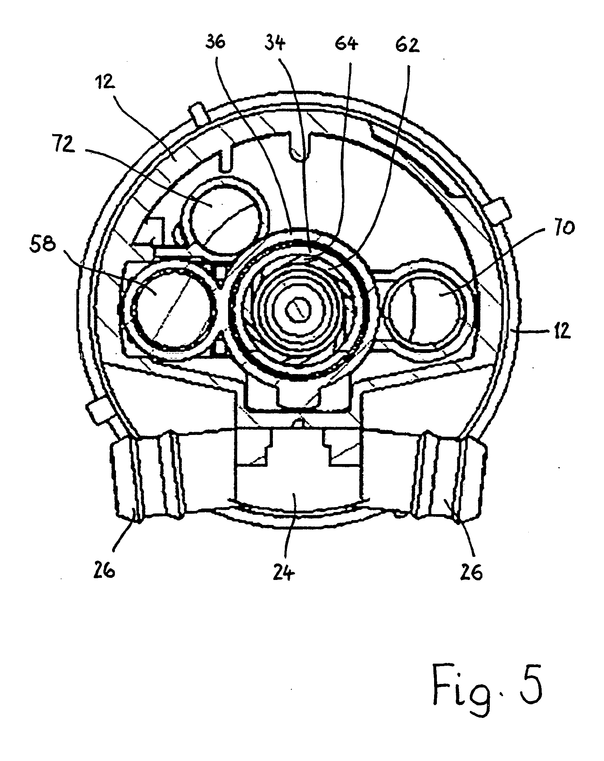

In das aus Kunststoff hergestellte Stopfengehäuse 12 ist, wie Figur 4 zeigt, ein Innengehäuse 22 eingesetzt, das als Spritzgussteil ein- oder zweistückig aus einem durchsichtigen Kunststoff hergestellt ist. Mit diesem verbunden oder einstückig ausgebildet ist an einer Seite ein T-förmiges Anschlussstück 24 (vgl. Figur 5), das zwei horizontale Anschlussstutzen 26 für die Wasserzufuhr bzw. die Weiterleitung des Wassers zur benachbarten Batteriezelle trägt. Aus Figur 3 geht weiter hervor, dass der Anschlussstutzen 26 für die Wasserzufuhr in eine Eintrittskammer 28 und von dieser über eine Verbindungsöffnung 30 in eine Vorkammer 32 führt. Die Vorkammer 32 führt ihrerseits von unten in einen ringförmigen Zulaufkanal 34, der an der Außenseite eines Ventilzylinders 36 angeformt ist, welcher Teil des Innengehäuses 22 ist.

Der Ventilzylinder 36 ist zentrisch innerhalb des Innengehäuses 22 ausgebildet und nimmt einen zentrisch gelagerten, vertikal beweglichen Ventilkörper 38 auf, der am oberen Ende eines senkrechten Schaftes 40 angeformt und hängend eingebaut ist. Der ringförmige Ventilkörper 38 hat eine nach oben offene Becherform und liegt im geschlossenen Zustand des Ventils auf einem konischen Ventilsitz 42 auf, der in den Figuren 3 und 4 zu erkennen ist.

Wie Figur 4 zeigt, ist das untere Ende des Schaftes 40 über einen Kipphebel 44, der auf einer Kippstütze 46 gelagert ist, mit einer zentrisch im Innengehäuse 22 vertikal verschiebbar gelagerten Schwimmerstange 48 verbunden. Das untere Ende 50 der Schwimmerstange 48 dient zur Befestigung eines nicht gezeigten Schwimmers. Die hohle Schwimmerstange 48 ist auf einem nach unten ragenden Führungsdorn 52 vertikal beweglich gelagert und trägt auf einer Seite eine nach oben ragende Stange 54, an der die lange Seite des Kipphebels 44 gelagert und an deren oberem Ende eine Anzeigescheibe 56 angebracht ist. Die Anzeigescheibe 56 ist durch ein kreisförmiges Fenster 58 in Höhe des Deckels 20 zu erkennen, das Teil des durchsichtigen Innengehäuses 22 ist.

Zwischen dem Ventilzylinder 36 und einem Innenzylinder 60 des Innengehäuses 22, auf dem der konische Ventilsitz 42 ausgebildet ist, befindet sich eine Zylinderwand 62, in die in Höhe des Ventilsitzes 42 über den Umfang verteilte Umlenkkanäle 64 eingearbeitet sind. Diese verlaufen von dem ringförmigen Zulaufkanal 34 ausgehend schräg zur Radialrichtung (vgl. Figur 5) und nach oben geneigt (vgl. Figur 3) und münden gemäß Figur 5 im wesentlichen tangential in einen Ventilinnenraum 66 oberhalb des konischen Ventilsitzes 42.

Aus Figur 4 ergibt sich, dass das zuströmende Wasser bei geöffnetem Ventil aus dem ringförmig ausgebildeten Zulaufkanal 34 durch die schräg verlaufenden Umlenkkanäle 64 in den dahinter liegenden Innenraum 66 gelangt, von wo es über einen Auslaufkanal 68 unterhalb einer zylindrischen Serviceöffnung 70 in die Batteriezelle fließt.

In Figur 5 sind die der Anzeigescheibe 52 diametral gegenüberliegende Serviceöffnung 70 zum Einführen einer Messsonde o. dgl. sowie ein Entlüftungszylinder 72 zu erkennen.

Wenn der erforderliche Füllstand des Wassers in der Batteriezelle erreicht ist, hebt der nicht dargestellte Schwimmer die Schwimmerstange 48 und mit dieser die seitlich davon abstehende Stange 54 nach oben, so dass über den kurzen Arm des Kipphebels 44 der Schaft 40 und damit der Ventilkörper 38 nach unten gezogen werden. Das wirbelartig über die Umlenkkanäle 64 zuströmende Wasser gelangt hierbei auf die Oberseite des teller- oder becherförmigen Ventilkörpers 38 und drückt diesen in seine Schließstellung auf den Ventilsitz 42.

Die erfindungsgemäß vorgesehenen und ausgerichteten Umlenkkanäle 64 verleihen dem vom Zulaufkanal 34 zuströmenden Wasser einen Drall, der bei angehobenem, geöffnetem Ventilkörper 38 einerseits den Füllvorgang beschleunigt und andererseits in der Schließphase des Ventils die Schließbewegung unterstützt. Auf diese Weise wird eine höchstmögliche Flexibilität hinsichtlich Füllgeschwindigkeit und Fülldruck sowohl beim Füllen als auch beim Schließen des Systems erreicht. Die Kreiselbewegung des abfließenden Wassers erzeugt, wie bereits erwähnt, einen Sog, wodurch das abfließende Wasser den Impuls für den Schließvorgang unabhängig vom Fülldruck erzeugt und den Schließvorgang selbsttätig reguliert. Ein weiterer Vorteil der Erfindung besteht in einem erhöhten Selbstreinigungseffekt im Bereich des Wasserauslaufs aufgrund der durch den Drall erzeugten Zentrifugalkräfte.

## Patentansprüche

1. Wassernachfüllstopfen zum automatischen Befüllen von Batteriezellen mit einem zylindrischen Stopfengehäuse (12), das einen Anschlussstutzen (26) für die Wasserzufuhr in das Gehäuse (12) sowie ein von einem Schwimmer betätigtes Ventil mit einem ringförmigen Ventilkörper (38) und einem konischen Ventilsitz (42) aufweist, das zwischen einem Zulaufkanal (34) und einem in die Batteriezelle führenden Auslaufkanal (68) angeordnet ist, **dadurch gekennzeichnet, dass** zwischen dem ringförmigen Zulaufkanal (34) und dem konischen Ventilsitz (42) drallerzeugende Umklenkkanäle (64) angeordnet sind, die in eine Zylinderwand (62) über den Umfang verteilt eingearbeitet sind.

2. Wassernachfüllstopfen nach Anspruch 1, **dadurch gekennzeichnet, dass** sich die Zylinderwand (62) zwischen einem im Gehäuse (12) zentrisch angebrachten Ventilzylinder (36) und einem Innenzylinder (60) befindet, auf dem der konische Ventilsitz (42) ausgebildet ist, wobei die Umlenkkanäle (64) schräg zur Radialrichtung verlaufen und im wesentlichen tangential in den Innenraum (66) des Ventilzylinders (36) oberhalb des Ventilsitzes (42) münden.

3. Wassernachfüllstopfen nach Anspruch 2, **dadurch gekennzeichnet, dass** die Umlenkkanäle (64) von dem ringförmigen Zulaufkanal (34) ausgehend schräg nach oben verlaufen.

4. Wassernachfüllstopfen nach einem der vorhergehenden Ansprüche, **dadurch gekennzeichnet, dass** der Ventilkörper (38) hängend eingebaut und am oberen Ende eines senkrechten Schaftes (40) angeformt ist, dessen unteres Ende über einen Kipphebel (44) mit einer zentrisch im Gehäuse (12) vertikal verschiebbar gelagerten Schwimmerstange (48) verbunden ist.

5. Wassernachfüllstopfen nach einem der Ansprüche 2 bis 4, **dadurch gekennzeichnet, dass** der ringförmige Zulaufkanal (34) Teil des Ventilzylinders (36) ist und über eine Vorkammer (32) mit dem Anschlussstutzen (24) in Verbindung ist.

## Claims

1. Water refilling plug for automatically filling battery cells, having a cylindrical plug housing (12) that comprises a connector fitting (26) for water delivery into the housing (12), as well as a valve, actuated by a float, having an annular valve body (38) and a conical valve seat (42), which valve is arranged between an inflow channel (34) and an outflow channel (68) leading into the battery cell, **characterized in that** swirl-generating deflection channels (64), which are recessed into a cylinder wall (62) in a manner distributed over the circumference, are arranged between the annular inflow channel (34) and the conical valve seat (42).

2. Water refilling plug according to claim 1, whereini the cylinder wall (62) is located between a valve cylinder (36) centeredly attached in the housing (12), and an inner cylinder (60) on which the conical valve seat (42) is embodied, the deflection channels (64) proceeding obliquely with respect to the radial direction and opening substantially tangentially into the inner space (66) of the valve cylinder (36) above the valve seat (42).

3. Water refilling plug according to claim 2, wherein the deflection channels (64) proceed obliquely upward from the annular inflow channel (34).

4. Water refilling plug according to one of the preceding claims, wherein the valve body (38) is installed in suspended fashion and is shaped onto the upper end of a vertical shaft (40) whose lower end is connected, via a rocker lever (44), to a float rod (48) mounted centeredly in the housing (12) in vertically displaceable fashion.

5. Water filling plug according to one of claims 2 to 4, wherein the annular inflow channel (34) is part of the valve cylinder (36) and is in communication with the connector fitting (26) via a prechamber (32).

## Revendications

1. Bouchon pour le remplissage automatique d' éléments de batterie avec de l'eau, comprenant un boîtier de bouchon cylindrique (12) avec un raccord (26) pour l'amenée d'eau dans ledit boîtier (12) ainsi qu' une vanne à corps annulaire (38) et à siège conique (42) commandée par un flotteur, ladite vanne étant positionnée entre un canal d'amenée (34) et un canal d'écoulement (68) menant dans l'élément de batterie, **caractérisé par le fait qu'**entre le canal annulaire d'amenée (34) et le siège conique (42) sont positionnés des canaux déflecteurs (64) générateurs de giration qui sont repartis sur la circonférence d'une paroi cylindrique (62).

2. Bouchon de remplissage selon la revendication 1, **caractérisé par le fait que** la paroi cylindrique (62) se trouve entre un cylindre de vanne (36) positionné au centre du boîtier (12) et un cylindre interne (60) sur lequel se trouve le siège conique (42), les canaux déflecteurs (64) s'étendant obliquement par rapport à la direction radiale et débouchant sensiblement tangentiellement dans l'intérieur (66) du cylindre de vanne (36) au-dessus du siège (42).

3. Bouchon de remplissage selon la revendication 2, **caractérisé par le fait que** les canaux déflecteurs (64) s'étendent, à partir du canal d'amenée annulaire (34), en direction oblique vers le haut.

4. Bouchon de remplissage selon une des revendications précédentes, **caractérisé par le fait que** le corps de vanne (38) est installé en position suspendue et formé de façon solidaire à l'extrémité supérieure d'une tige verticale (40) dont l'extrémité inférieure est reliée au moyen d'un levier oscillant (44) à une tige de flotteur (48) positionnée au centre du boîtier de bouchon (12) dans laquelle elle est verticalement déplaçable.

5. Bouchon de remplissage selon une des revendications 2 à 4, **caractérisé par le fait que** le canal annulaire d'amenée (34) est une partie intégrante du cylindre de vanne (36) et communique avec le raccord (26) à travers une chambre d'accès (32).
